# EUROPEAN PATENT SPECIFICATION

(11) **EP 0 428 195 B1**
(45) Date of publication and mention of the grant of the patent: **09.03.1994**
(21) Application number: 90202638.4
(22) Date of filing: 04.10.1990
(51) Int. Cl.: F16L 21/035, B28B 21/56, B28B 21/76

(54) **A process of protecting the spigot of concrete pipes**
Verfahren zum Schutz von Betonrohreinsteckverbindungen
Procédé de protection de l'embout de tuyaux en béton

(30) Priority: 13.11.1989 FR 8914857
(43) Date of publication of application: 22.05.1991
(73) Proprietor: Forsheda AB, S-330 12 Forsheda (SE)
(72) Inventor: Millet, Jean-Michel, F-17620 Echillais (FR); De Sampigny, Gilles, F-283 50 Saint Lubin Des Joncherets (FR); De La Llave, Claude, F-17000 La Rochelle (FR)
(74) Representative: Linde, Leif

(56) References cited:
- EP-A- 0 276 785
- DE-A- 3 520 949
- FR-A- 2 229 915
- US-A- 3 139 469

## Description

This invention relates to a process of protecting the spigot of concrete pipes made in a vertical mould with the spigot directed upwards, in which a disposable ring is arranged on the spigot of the pipes and said ring is left in position on the spigot until the laying of the pipes to protect said spigot, and is removed from the spigot before the laying of the pipes.

The concrete pipes employed particularly for sewer lines have a socket at one end and a spigot at the other end, and the spigot of one pipe is adapted for insertion in the socket of the following pipe. To ensure tightness at the fitting together of the two pipes a sealing ring is inserted between the two ends. The spigot of a pipe can be sealingly fitted into the socket of the following pipe only when the corresponding surfaces of the two pipe ends are in good condition. However, it often happens that the outer surface of the spigot of the pipes is damaged in handling (storage, deliver, laying), which compromises the seal between the pipes. Actually, as distinct from the inner surface of a socket which is protected by the end that surrounds it, the outer surface of a spigot is freely exposed and, considering the fragility of the concrete, easily sustains damage by the effect of the shocks that may easily sustains damage by the effect of the shocks that may arise during the handling of the pipes.

It should also be observed that positioning a sealing ring on a pipe, at the laying thereof, is a relatively delicate operation since the laying generally takes place in a trench, and that the sealing ring should preferably be lubricated to facilitate fitting together of the pipe. Under these circumstances, it is difficult to guarantee a correct application of the sealing ring and the cleanness thereof, which might also compromise the tightness of the fitted-together pipes.

Finally, in a customary process of concrete pipe making termed radial compression, fresh concrete is introduced into a vertical mould having an outer mould jacket and a base ring, the lower part of said jacket and said base ring being of a shape corresponding to that of the pipe socket, and the pipe is formed by compression of the conrete against the jacket with the aid of a rotary head movable from below upwards through the mould. For the formation of the spigot at the upper part of the mould, said mould is here provided with a forming means internally having a shape corresponding to the outer shape that the pipe spigot shall have. After production, the concrete pipe is conveyed in the mould to the hardening station and eventually removed form the mould. To protect the shape of the spigot, an outer and an inner cap are placed on the upper end (spigot) of the pipe, said two caps being removed only after finished hardening of the concrete. As each set of caps is thus immobilised during hardening, it is necessary for a concrete pipe making factory to have at its disposal a great number of cap sets.

According to EP-A-0 276 785 it is previously known to arrange a disposable ring on the spigot of a concrete pipe to protect the spigot against damages. However, this ring is arranged on the spigot subsequently to the production of the pipes and does not represent any solution to the production problems discussed above.

US-A-3 139 469 describes a method for forming concrete pipes according to which the socket is provided with an insert and the spigot is provided with a jacket. The insert and the jacket are permanently connected with the socket and the spigot, respectively, and are subsequently used for sealing the pipes when the pipes are fitted together. The measure of providing the pipes with permanent inserts and jackets increases the costs for the pipes.

The object of the present invention is to provide a process that permits not only the protection of the spigot of concrete pipes until the laying thereof but also a simplified production of the pipes as well as a reduction of the investment and manufacturing costs for this production.

A further object of the invention is to provide a process that permits not only protecting the spigot of concrete pipes until the laying thereof but also dispensing with the positioning of a sealing ring at the laying, thus avoiding the risks of incorrectly positioning and dirtying the sealing ring, especially when the latter is lubricated.

In order to comply with the above objects the process according to the invention is characterized in that the disposable ring is of shock-absorbing material and is positioned in the mould before the moulding of the pipe to form the spigot of the pipe with the aid of the disposable ring, and that the disposable ring is left in position on the spigot after removal of the mould from the pipe to preserve the shape of the spigot during hardening.

This disposable ring which may be for example a ring moulded of a cellular plastic, such as expanded polystyrene or polyurethane, available at a very low price, effectively protects the spigot of the pipes at any handling where shocks may arise, resulting in damage to the spigot of the pipes which is particularly fragile because it is thinner than the remainder of the pipe and its outer surface is directly exposed to shocks.

In an embodiment it is possible to incorporate with the disposable ring a sealing ring which thus is in position on the spigot of the pipe from the very concreting of the pipe and protected, until the fitting together of the pipes, by the disposable ring surrounding it.

In the last-mentioned embodiment the sealing ring incorporated with said disposable ring may preferably present an inwardly extending shoulder which, after the formation of the spigot, is confined by said spigot. It is thus ensured that the sealing ring is perfectly positioned and retained during the fitting together of the pipes.

To facilitate said fitting together, it is possible to lubricate the sealing ring at its outwardly facing portion which is covered by the disposable ring, thereby ensuring protection of the spigot against shocks or impacts as well as protection of the sealing ring against shocks, ultraviolet radiation and dirtying.

In the following, several embodiments illustrative of and non-limitative to the invention will be elucidated more in detail with reference to the accompanying drawings, in which:
Figures 1 and 2 show the prior-art process of moulding concrete pipes by radial compression;
Figure 3 shows the compression and formation phase of the spigot of a concrete pipe according to the process of invention;
Figure 4 shows the spigot of the pipe made according to Figure 3, after removal from the mould;
Figures 5 and 6 show two other embodiments for making a concrete pipe according to the invention.

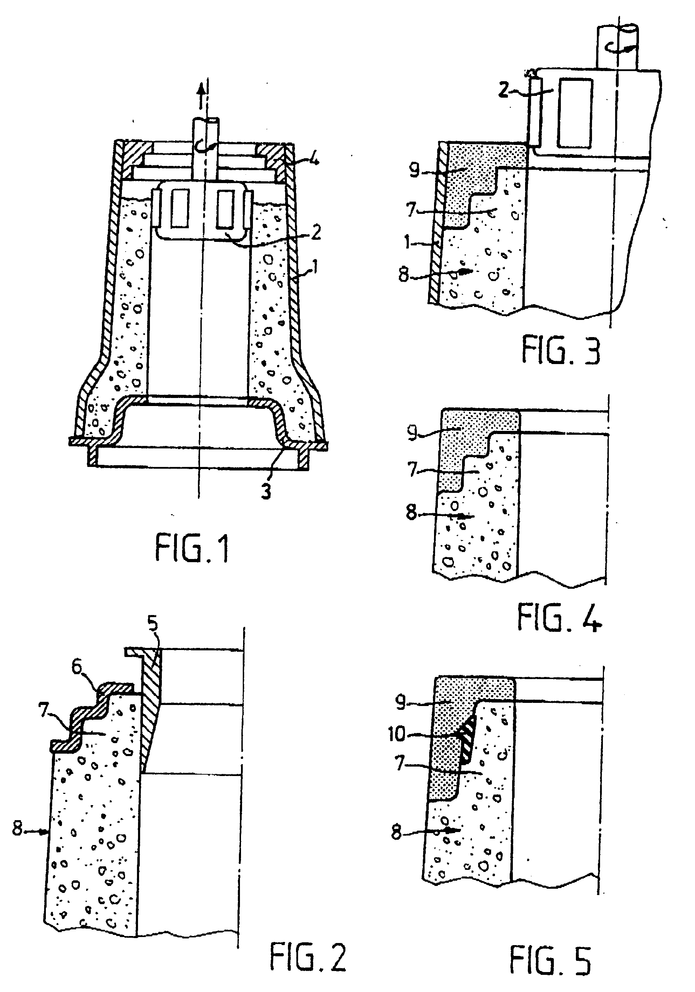

The conventional process of making concrete pipes by radial compression comprises, according to Figure 1, filling a mould cavity defined between an outer mould 1 and a base ring 3 with concrete, and compacting the concrete by radial compression with the aid of a rotary head 2 movable from below upwards through the mould 1. The lower part of the outer mould 1 and the base ring 3 are of a shape corresponding to that of the socket of the pipe to be made. For the formation of the spigot at the upper end of the pipe, the mould 1 is given a specific shape at its corresponding end, for example by fixation of a forming means 4. After moulding, the pipe is conveyed to the hardening station where it is cleared from the mould 1 by opening and extraction of the mould 1 in an upward direction, with the pipe resting on the base ring 3.

To avoid deformation of the spigot after removal of the mould, an inner cap 5 and an outer cap 6 are then generally placed on the spigot 7 of the pipe 8, as shown in Figure 2, said caps being removed only after the pipe has hardened sufficiently.

In consequence, the spigot which is specifically exposed to shocks or impacts is not protected during the further handling of the pipe (storage, delivery, laying of the pipes).

According to the present invention, the spigot 7 of the pipe 8 is protected, from the very making of the pipe 8 until the laying thereof, by a disposable ring 9 surrounding the spigot 7 externally. Said ring 9 is made of shock-absorbing, inexpensive and readily mouldable material, preferably expanded polystyrene or polyurethane.

Positioning of said ring 9 on the spigot 7 of the pipe 8 is carried out at the moulding of the pipe 8.

According to Figure 3, the operations of compressing the concrete to constitute the pipe 8 in the outer mould 1 and forming the spigot 7 of the pipe 8 are carried out by radial compaction of the concrete with the aid of the rotary head 2 which is provided with rollers, said ring 9 being placed and immobilised in the upper part of the mould 1 and having internally the profile that the spigot 7 of the pipe 8 shall present externally. Thus, it is the ring 9 that under the pressure of the head 2 forms the spigot 7 of the pipe 8.

The ring 9 rests on the spigot 7 of the pipe 8 when the latter is cleared from the mould and continues to do so during hardening, storage and delivery until the laying of the pipe, thereby ensuring not only the formation of the spigot at concreting but also the shape permanence of the spigot at the hardening as well as the continuous protection of the spigot until the laying of the pipe.

The rings 9 which are disposable, inexpensive rings, one for each pipe made, replace the caps 5, 6 employed according to the process in Figures 1 and 2 during hardening of the pipes.

Figure 4 shows the spigot 7 of the pipe 8 and the ring 9 with which the spigot is provided, after the pipe has been cleared from the mould.

It should be observed that the disposable ring 9, ensuring the protection of the spigot 7 of the pipe 8 at the handling thereof, is brought into position at the formation of the spigot, in which formation said ring 9 participates.

According to Figure 5, a sealing ring 10 is incorporated with the disposable ring 9 which, in this instance, constitutes a forming and protective ring for the spigot 7. The sealing ring 10 is thus partially embedded in the concrete of the spigot 7, and the disposable ring 9 then ensures both protection of the spigot 7 against shocks and protection of the sealing ring 10 against shocks and ultraviolet radiation.

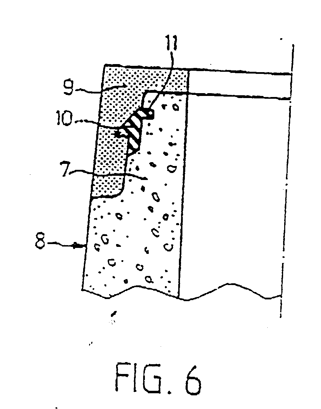

According to Figure 6, the sealing ring 10 incorporated with the disposable ring 9 which simultaneously serves as a forming ring and as a protective ring, comprises an inwardly extending shoulder 11 which may be either an integral part of the sealing ring, as illustrated, or a rigid part, e.g. a closed or open ring of metal or plastic. At the formation of the spigot 7, said shoulder 11 of the sealing ring 10, which is embedded in the concrete of the spigot 7, is entrapped by the latter, which guarantees a perfect positioning of the sealing ring 10 relative to the spigot 7.

The, the disposable ring 9 could be made of materials other than expanded polystyrene, provided that this material is inexpensive, readily usable by moulding, shock-absorbing and frangible in the embodiments in which the disposable ring comprises an incorporated sealing ring.

As for the sealing means 10, it is understood that the general triangular shape that this sealing ring has in the illustrated embodiments may be replaced by other shapes permitting, on the one hand, easy insertion of the pipe spigots and, on the other hand, a satisfactory seal. However, sealing rings or joints such as those sold by the applicant under the designation "joints Delta", are particularly suitable, especially when the pipes are fitted together without prior removal of the rings 9. As for the materials constituting the sealing ring, it is possible, within the scope of the invention, to make use of any prior-art materials for providing rigid, semi-rigid or flexible sealing rings employed in the domain of concrete pipes.

This invention also relates to concrete pipes other than circular pipes for sewer lines, for example to pipes of oval cross section.

It should be observed that the disposable ring is brought in position before the forming of the spigot and thus participates in this forming, also at the production of pipes by other processes than that by radial compression. This is so, especially at pipe production by vibration and compression, wherein the disposable ring in part replaces the forming means which is driven from above in the mould according to this process of forming the spigot.

## Claims

1. A process of protecting the spigot (7) of concrete pipes (8) made in a vertical mould (1) with the spigot directed upwards, in which a disposable ring (9) is arranged on the spigot (7) of the pipes (8) and said ring (9) is left in position on the spigot until the laying of the pipes to protect said spigot, and is removed from the spigot (7) before the laying of the pipes
**characterized** by the fact that the disposable ring (9) is of shock-absorbing material and is positioned in the mould (1) before the moulding of the pipe to form the spigot of the pipe with the aid of the disposable ring, and that the disposable ring (9) is left in position on the spigot (7) after removal of the mould from the pipe to preserve the shape of the spigot during hardening.

2. A process as claimed in claim 1, **characterized** by the fact that a sealing ring (10) is incorporated with the disposable ring (9).

3. A process as claimed in claim 2, **characterized** by the fact that use is made of a sealing ring (10) which comprises an inwardly extending shoulder (11) and that the shoulder (11) is embedded in the spigot (7) at the forming thereof.

4. A process as claimed in claim 2 or 3, **characterized** by the fact that the sealing ring (10) is lubricated on its outwardly facing portion and that this portion is covered by the disposable ring (9).

## Patentansprüche

1. Ein Verfahren zum Schützen des Spitzendes (7) von Betonrohren (8), die in einer senkrechten Gußform (1) mit dem Spitzende nach oben gerichtet hergestellt werden, bei welchem ein entfernbarer Ring (9) auf dem Spitzende (7) der Rohre (8) angeordnet ist und besagter Ring (9) in Lage auf dem Spitzende bis zur Verlegung der Rohre belassen wird, um besagtes Spitzende zu schützen, und entfernt wird von dem Spitzende (7) vor der Verlegung der Rohre,
**gekennzeichnet durch die Tatsache,**
daß der entfernbare Ring (9) aus stoßdämpfendem Material besteht und in der Gußform (1) vor dem Gießen des Rohres angeordnet ist, um das Spitzende des Rohres mit der Hilfe des entfernbaren Ringes zu formen, und daß der entfernbare Ring (9) in Lage auf dem Spitzende (7) nach Entfernen der Gußform von dem Rohr belassen wird, um die Form des Spitzendes während des Härtens zu erhalten.

2. Ein Verfahren wie in Anspruch 1 beansprucht,
**gekennzeichnet durch die Tatsache,**
daß ein Abdichtungsring (10) in den entfernbaren Ring (9) eingegliedert ist.

3. Ein Verfahren wie in Anspruch 2 beansprucht,
**gekennzeichnet durch die Tatsache,**
daß von einem Abdichtungsring (10) Gebrauch gemacht wird, welcher einen sich nach innen erstreckenden Vorsprung (11) umfaßt, und daß der Vorsprung (11) in das Spitzende (7) bei dessen Formung eingelassen wird.

4. Ein Verfahren wie in Anspruch 2 oder 3 beansprucht,
**gekennzeichnet durch die Tatsache,**
daß der Abdichtungsring (10) auf seinem nach außen stehenden Teil geschmiert ist, und daß dieser Teil von dem entfernbaren Ring (9) ummantelt wird.

## Revendications

1. Procédé de protection de l'about mâle (7) de tuyaux en béton (8) élaborés dans un moule vertical (1) avec l'about mâle dirigé vers le haut, dans lequel une bague jetable (9) est placée sur l'about mâle (7) des tuyaux (8) et ladite bague (9) est laissée en place sur l'about mâle jusqu'à la pose des tuyaux pour protéger ledit about mâle et est retirée de l'about mâle (7) avant la pose des tuyaux, **caractérisé** par le fait que ladite bague jetable (9) est en matériau absorbant les chocs et est positionnée dans le moule (1) avant le moulage du tuyau pour former l'about mâle du tuyau à l'aide de la bague jetable, et en ce que la bague jetable (9) est laissée en place sur l'about mâle (7) après démoulage du tuyau pour préserver la forme de l'about mâle pendant le durcissement.

2. Procédé selon la revendication 1, **caractérisé** par le fait qu'une bague d'étanchéité (10) est incorporée à la bague jetable (9).

3. Procédé selon la revendication 2, **caractérisé** par le fait que l'on utilise une bague d'étanchéité (10) qui comprend un épaulement (11) s'étendant vers l'intérieur et que l'épaulement (11) est noyé dans l'about mâle (7) lors de la formation de celui-ci.

4. Procédé selon la revendication 2 ou 3, **caractérisé** par le fait que la bague d'étanchéité (10) est lubrifiée sur sa partie orientée vers l'extérieur et que cette partie est recouverte par la bague jetable (9).
